# DEMANDE DE BREVET EUROPEEN

(11) **EP 2 957 966 A1**
(43) Date de publication de la demande: **23.12.2015**
(21) Numéro de dépôt: 14173297.4
(22) Date de dépôt: 20.06.2014
(51) Int. Cl.: G04C 10/00, G04G 21/02, G04B 47/06

(54) **Dispositif de fermeture semi-étanche**

(71) Demandeur: The Swatch Group Research and Development Ltd., 2074 Marin (CH)
(72) Inventeur: Germiquet, Christophe, 2515 Prêles (CH); Stalder, Michael, 2503 Bienne (CH)
(74) Mandataire: Tournel, Maxime Jean-Joseph

(57) **Abrégé**

La présente invention concerne un objet portable comprenant un boîtier (2) formant une enceinte dans laquelle un appareil (6) nécessitant de l'air pour son fonctionnement est agencé, caractérisé en ce que ledit boitier comporte au moins une première ouverture (102, 202, 302, 402), ledit objet portable comprenant en outre un dispositif de fermeture (12).

## Description

La présente invention concerne un objet portable comprenant un boîtier formant une enceinte dans laquelle un appareil nécessitant de l'air pour son fonctionnement est agencé.

### ART ANTERIEUR

Il est connu des objets portables comme des montres ou des appareils téléphoniques mobiles ou des tablettes tactiles qui sont considérés comme étanches afin de pouvoir être utiliser en milieu aquatique. Pour cela, ledit objet portable est muni d'une multitude de joints ou de solutions permettant d'assurer une étanchéité quasi-parfaite tant aux gaz qu'aux liquides. En horlogerie, les joints sont en général utilisés pour assurer l'étanchéité entre deux pièces mobiles, par exemple couronne de remontoir et tube de couronne, ou entre deux pièces fixes, par exemple fond et carrure. Ces joints ne sont en général pas totalement étanches aux gaz, mais la perméabilité à ces derniers restes très faibles. Principalement les gaz constitués de très petites molécules ou hautement solubles dans les joints ont une perméabilité notable.

Toutefois, il existe des applications dans lesquelles cette étanchéité élevée aux gaz est un inconvénient. En effet, pour des applications de type altimètre ou l'utilisation d'une alimentation zinc-air, il est nécessaire de permettre un flux d'air entre l'enceinte de l'objet portable dans laquelle le dispositif altimètre et/ou l'alimentation zinc-air sont agencés et l'extérieur de l'objet portable.

Si de tels objets existent, il est nécessaire de garder l'étanchéité dudit appareil.

### RESUME DE L'INVENTION

La présente invention cherche donc à pallier les inconvénients de l'art antérieur en fournissant un objet portable comprenant un dispositif semi-étanche c'est à dire laissant passer les gaz mais pas les liquides.

A cet effet, l'invention concerne un objet portable comprenant un boîtier formant une enceinte dans laquelle un appareil nécessitant de l'air pour son fonctionnement est agencé, caractérisé en ce que ledit boitier comporte au moins une première ouverture, ledit objet portable comprenant en outre un dispositif de fermeture muni d'un système à clapet pour permettre ou non à l'air de rentrer dans l'enceinte en fermant ou non ladite ouverture.

Dans un premier mode de réalisation avantageux, ledit appareil nécessitant de l'air pour son fonctionnement est une pile zinc-air.

Dans un second mode de réalisation avantageux, ledit appareil nécessitant de l'air pour son fonctionnement est un altimètre.

Dans un troisième mode de réalisation avantageux, le système à clapet comprenant un clapet monté mobile par un actionneur, ledit actionneur comprenant un bras à l'extrémité libre duquel le clapet est fixé.

Dans un quatrième mode de réalisation avantageux, l'actionneur déplace le clapet selon un mouvement de translation.

Dans un cinquième mode de réalisation avantageux, l'actionneur est commandé par un système électronique r agencé dans l'objet portable.

Dans un autre mode de réalisation avantageux, le système à clapet comprend un clapet monté mobile par une poutre montée à pivotement sur un socle, ledit clapet étant monté à une première extrémité de la poutre.

Dans un autre mode de réalisation avantageux, le système à clapet comprend en outre une seconde ouverture dans laquelle est agencé un poussoir, ledit poussoir étant fixé à une seconde extrémité de la poutre de sorte qu'une action sur le poussoir dans une direction entraine le déplacement du clapet dans une direction opposée.

Dans un autre mode de réalisation avantageux, le clapet comporte une base circulaire à partie de laquelle s'étend une tige dont l'extrémité libre est fixée à ladite poutre, ladite base entrant en contact avec ledit boitier pour le fermer.

Dans un autre mode de réalisation avantageux, la première ouverture comprend une zone de décrochement présentant une section de plus faible diamètre, ladite base entrant en contact avec ladite zone de décrochement pour fermer ledit boîtier.

Dans un autre mode de réalisation avantageux, le clapet se présente sous forme d'un cylindre terminé par un cône, la première ouverture possédant une forme similaire de sorte que le clapet puisse s'insérer dans ladite première ouverture.

Dans un autre mode de réalisation avantageux, le dispositif de fermeture comprend en outre une membrane semi-perméable comportant un support poreux sur lequel un film perméable aux gaz et imperméable aux liquides est fixé, l'épaisseur dudit film permettant de modifier la constante de temps pour l'équilibre des gaz entre l'intérieur et l'extérieur de l'objet portable.

### BREVE DESCRIPTION DES FIGURES

Les buts, avantages et caractéristiques du dispositif selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement un premier mode d'exécution d'un premier mode de réalisation de l'objet portable selon l'invention;
- La figure 2 représente schématiquement un premier mode d'exécution d'un premier mode de réalisation de l'objet portable selon l'invention;
- Les figures 3 et 4 représentent schématiquement un second mode d'exécution d'un premier mode de réalisation de l'objet portable selon l'invention;
- La figure 5 représente schématiquement un premier mode d'exécution d'un second mode de réalisation de l'objet portable selon l'invention;
- La figure 6 représente schématiquement un premier mode d'exécution d'un second mode de réalisation de l'objet portable selon l'invention;
- Les figures 7 et 8 représentent schématiquement un second mode d'exécution d'un second mode de réalisation de l'objet portable selon l'invention;
- La figure 9 représente schématiquement une variante des premiers et seconds modes de réalisation de l'objet portable selon l'invention;

### DESCRIPTION DETAILLEE

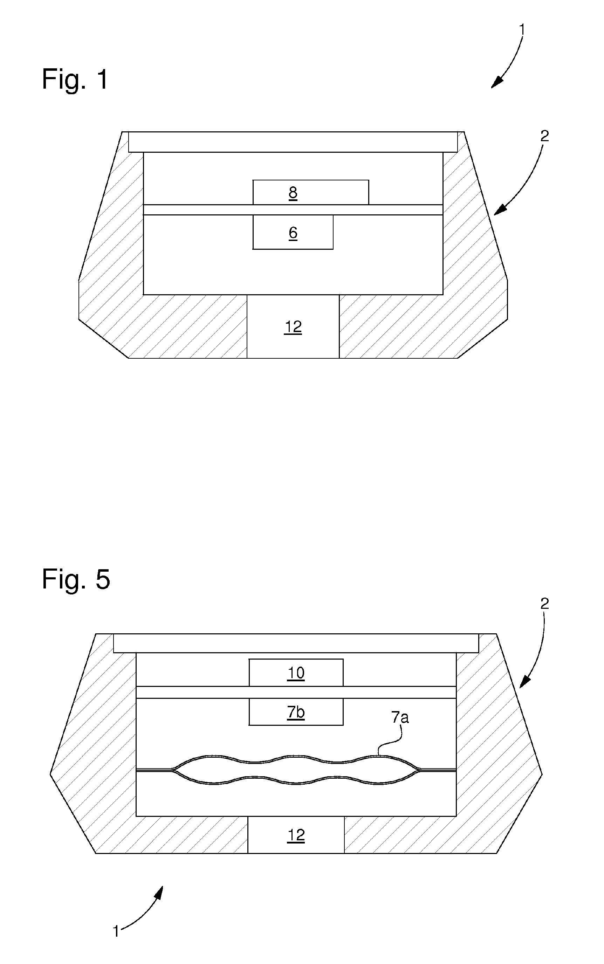

Un objet portable 1 selon la présente invention est représenté aux figures 1 à 8. Cet objet portable 1 peut se présenter sous la forme d'une pièce d'horlogerie ou d'un téléphone portable ou un smartphone ou une tablette tactile.

Cet objet portable 1 comporte un boitier 2 formant une enceinte dans lequel un appareil 4 nécessitant de l'air pour son fonctionnement est agencé.

Dans un premier mode de réalisation visible aux figures 1 à 4, l'appareil 4 nécessitant de l'air pour son fonctionnement est une pile électrique 6. Cette pile est par exemple du type zinc-air c'est-à-dire qu'elle utilise l'oxygène de l'air pour oxyder le métal la composant et fournir de l'électricité. Une telle pile zinc-air doit être alimentée en oxygène pour ne pas étouffer. Par contre, la perméabilité à l'air, en particulier à la vapeur d'eau, ne doit pas être excessive sous peine de sécher ou de noyer la pile et de perdre en performances.

Cette pile électrique est utilisée pour faire fonctionner un système électronique 8 associé à des moyens d'affichage 10. Le système électronique 8 peut en outre comprendre des moyens de commande et/ou des moyens de communications.

Avantageusement selon l'invention, l'objet portable est en outre muni d'un dispositif de fermeture 12 permettant à la pile d'être alimentée en air tout en assurant à l'objet portable une étanchéité aux liquides.

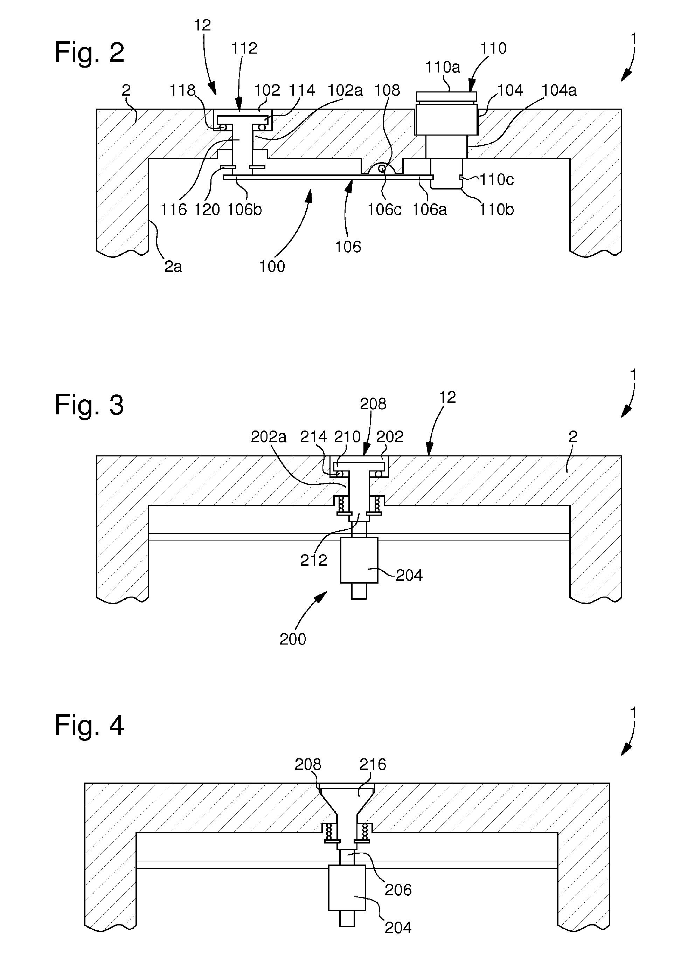

Dans un premier mode d'exécution visible à la figure 2, le boitier 2 de l'objet portable est agencé pour comprendre une première ouverture 102 et une seconde ouverture 104 situées dans le fond du boitier. La première ouverture 102 et la seconde ouverture 104 sont de préférence circulaires. Le dispositif de fermeture 12 se présente alors sous la forme d'un système à clapet 100. Ce système à clapet 100 comporte une poutre 106 montée à pivotement sur un socle 108 via un axe de pivotement 106c. Le socle est disposé sur la face intérieure 2a du boitier 2. La poutre 106 présente une première extrémité 106a et une seconde extrémité 106b.

La première extrémité 106a est agencée pour coopérer avec un poussoir 110, ce poussoir 110 devant s'insérer dans la seconde ouverture 104, la première ouverture 102 étant l'ouverture laissant entrer l'air. Ce poussoir 110 est une pièce dont la section est identique à celle de la seconde ouverture 104 de sorte à former une pièce cylindrique. La pièce cylindrique formant le poussoir comprend une extrémité extérieure 110a visible depuis l'extérieur de l'objet portable et une extrémité intérieure 110b. Cette extrémité intérieure 110b du poussoir 110 est couplée avec la poutre 106 via une gorge 110c de sorte que le déplacement du poussoir entraine le basculement de la poutre.

Il peut être prévu que la section du poussoir ne soit pas constante. En effet, la seconde ouverture 104 peut présenter un décrochement 104a de son diamètre de sorte que celui-ci diminue. Ce décrochement 104a du diamètre entraine l'apparition d'une butée empêchant le poussoir 110 de s'enfoncer à l'intérieur du boitier 2.

Au niveau de la seconde extrémité de la poutre, un clapet 112 est agencé. Ce clapet 112 se présente sous la forme d'une base circulaire 114 à partie de laquelle s'étend une tige 116 dont l'extrémité libre est fixée à la poutre 106. Le clapet 112 est alors utilisé pour fermer la première ouverture 102.

La première ouverture 102 peut présenter une zone de décrochement 102a présentant une section de plus faible diamètre. Cette zone de décrochement 102a est utilisée pour agir avec le clapet 112 de sorte à ouvrir ou fermer ladite ouverture 102.

En effet, le clapet 112 est solidaire de la poutre 106 de sorte que le basculement de la poutre 106 par rapport à son axe de pivotement 106c entraine une modification de la position du clapet 112 par rapport à la zone de décrochement 102a. Ainsi, lorsque le poussoir est enfoncé vers l'intérieur du boitier 2, la poutre bascule sur son axe de pivotement 106c. Le clapet 112 se déplace alors dans un sens opposé. Dans ce cas précis, le clapet 112 s'éloigne de la zone de décrochement 102a laissant l'air rentrer dans le boitier 2.

Lorsque le poussoir 110 est tiré vers l'extérieur du boitier 2, la poutre 106 bascule sur son axe de pivotement 106c. Le clapet 112 se déplace alors dans un sens opposé, dans le cas présent, pour se rapprocher de la zone de décrochement 102a. Un contact se fait entre la zone de décrochement 102a et le clapet 112 pour bloquer l'air et l'empêcher de rentrer dans le boitier 2. Le poussoir 110 peut être muni, à son extrémité extérieure 110a, d'une rainure 110d pour faciliter la préhension dudit poussoir 110. Il pourra être prévu que lorsque le poussoir 110 est en position enfoncé pour permettre l'ouverture du clapet 112, ledit poussoir 110 fasse saillie du boitier 2 pour faciliter sa préhension.

Astucieusement, il peut être prévu que le système à clapet 100 puisse se fermer automatiquement en cas de contact avec un milieu aquatique. Effectivement, lorsque le clapet 112 est en position ouvert, l'air rentre à l'intérieur du boitier. Toutefois, si l'utilisateur plonge soudainement dans un milieu aquatique ou oublie que le poussoir est en position enfoncé, l'eau peut s'engouffrer dans le boitier 2 et causer des dégâts. A ce titre, la poutre 106 est réalisée dans un matériau présentant des propriétés de flexibilité. Cette propriété permet, lorsque l'objet portable 1 est plongé dans un milieu aquatique, d'avoir la pression de l'eau qui s'exerce sur la poutre 106. Cette pression entraîne une déformation de la poutre 106 et donc un déplacement du clapet 112 qui va être plaqué sur la zone de décrochement. La première ouverture 102 va alors être fermée et rendre l'objet portable 1 étanche.

Dans une autre variante, il peut être prévu d'installer un joint 118 au niveau de la zone de décrochement 102a. Ce joint 118 s'intercale entre la base 114 du clapet 112 et la zone de décrochement 102a et permet une meilleure étanchéité aux liquides.

Dans une autre variante, une butée 120 est agencée au niveau de la face inférieure 2a du boitier 2. Cette butée 120 est utilisée afin de limiter la course du clapet 112.

Dans un second mode d'exécution, le boitier 2 de l'objet portable est agencé pour comprendre une première ouverture 202 laissant passer un volume d'air conséquent située dans le fond du boitier. Le dispositif de fermeture 12 se présente alors sous la forme d'un système à clapet 200 commandé par un actionneur. Ce système à clapet 200 comporte un actionneur 204 relié par un bras 206 à un clapet 208. L'actionneur est commandé par un microcontrôleur intégré au système électronique 8, celui-ci pouvant commander automatiquement l'actionneur 204 ou transmettre une commande manuelle venue de l'utilisateur via des moyens de commande. L'actionneur 204 agit alors sur le clapet 208 en le déplaçant en translation pour fermer ou ouvrir ladite première ouverture 202.

Dans une première alternative visible à la figure 3, le clapet se présente sous la forme d'une base 210 circulaire à partie de laquelle s'étend une tige 212 dont l'extrémité libre est fixée au bras 206 et donc relié à l'actionneur 204. La première ouverture 202 présente alors une zone de décrochement 202a présentant une section de plus faible diamètre. Cette zone de décrochement 202a est utilisée pour agir avec le clapet 208 de sorte à ouvrir ou fermer ladite ouverture 202.

En effet, lorsqu'il est décidé par l'utilisateur ou le microcontrôleur que la pile nécessite de l'air, une commande est envoyée à l'actionneur. Cette commande ordonne à l'actionneur 204 d'agir sur le clapet 208 pour laisser libre l'accès à l'air. L'actionneur 204 se met alors en fonctionnement pour, via le bras 206, déplacer le clapet 208. Dans ce cas ou la pile nécessite de l'air, le clapet 208 est déplacé afin de s'éloigner de la zone de décrochement 202a.

Lorsqu'il est décidé par l'utilisateur ou le microcontrôleur que la pile a suffisamment d'air ou qu'elle doit être isolée de l'environnement extérieur, une commande est envoyée à l'actionneur 204. Cette commande ordonne à l'actionneur 204 d'agir sur le clapet 208 pour fermer l'accès à l'air. L'actionneur 204 se met alors en fonctionnement pour, via le bras 206, déplacer le clapet 208. Dans ce cas, le clapet 208 est déplacé afin d'entrer en contact de la zone de décrochement 202a et bloquer l'accès à l'air.

Dans une variante de cette première alternative, il peut être prévu d'installer un joint 214 au niveau de la zone de décrochement 202a. Ce joint 214 s'intercale entre la base 210 du clapet 208 et la zone de décrochement 202a et permet une meilleure étanchéité aux liquides.

Dans une seconde alternative visible à la figure 4, le clapet 208 se présente sous forme d'obus 216 c'est à dire en forme de cylindre terminé par un cône. La première ouverture 202 possède également une forme d'obus de sorte que le clapet 208 puisse s'insérer dans l'ouverture 202. Comme le clapet 208 et l'ouverture 202 ont une forme similaire, le clapet 208 vient prendre appui sur la partie conique de l'ouverture offrant une efficacité de la fermeture améliorée.

Ainsi la fermeture de la première ouverture 202 par le clapet 208 se fait par frottement. En effet, lorsqu'il est décidé par l'utilisateur ou le microcontrôleur que la pile a suffisamment d'air ou qu'elle doit être isolée de l'environnement extérieur, une commande est envoyée à l'actionneur 204. Cette commande ordonne à l'actionneur 204 d'agir sur le clapet 208 pour fermer l'accès à l'air. L'actionneur se met alors en fonctionnement pour, via le bras, déplacer le clapet. Comme le clapet et la première ouverture ont une forme similaire, le clapet s'emboite dans l'ouverture. Cet emboitement du clapet dans l'ouverture provoque une fermeture de cette dernière.

Pour la première et la seconde alternative, il peut être prévu de remédier aux problèmes d'ouverture accidentelle du boitier 2 dans un environnement non adéquate. En effet, une fausse manipulation peut arriver ou le microcontrôleur peut détecter un manque d'oxygène et tenter d'ouvrir le boitier 2. Ainsi, pour contourner ce problème, l'actionneur 204 sera dimensionné de sorte que la force qu'il exerce pour ouvrir la première ouverture 202 soit insuffisante lorsqu'une pression importante est exercée sur ledit clapet 208. Ainsi, si le microcontrôleur tente d'ouvrir le clapet 208, la pression exercée par l'eau rendre impossible le déplacement du clapet 208 par l'actionneur 204.

Dans un second mode de réalisation visible à la figure 5, l'appareil nécessitant de l'air pour son fonctionnement 4 est un altimètre 7. Un tel altimètre 7 peut être mécanique ou électronique et comprend une membrane déformable 7a.

Dans le cas d'un altimètre mécanique, celui-ci comprend un mécanisme de transmission 7b. La membrane 7a est capable de se déformer mécaniquement sous l'effet de la pression extérieure agissant alors sur le dispositif de transmission 7b. Le mécanisme de transmission 7b transfert ainsi ledit mouvement de déformation de la membrane 7a, représentatif de la pression, vers des moyens d'affichage 10 affichant la valeur de l'altitude.

Dans le cas d'un altimètre électronique (non représenté), celui-ci comprend un circuit de transmission 7c. La membrane 7a est capable de se déformer mécaniquement sous l'effet de la pression extérieure agissant alors sur le circuit de transmission 7c. Le circuit de transmission 7c est une interface permettant de convertir la déformation de la membrane en un signal électrique. Ce signal électrique est traité afin que des moyens d'affichage 10 puissent utiliser ce signal pour afficher l'information d'altitude.

Avantageusement selon l'invention, l'objet portable 1 est en outre muni d'un dispositif de fermeture 12 permettant à l'air de s'infiltrer dans l'enceinte de l'objet portable de sorte à interagir avec la membrane 7a de l'altimètre sans que l'eau ne s'infiltre.

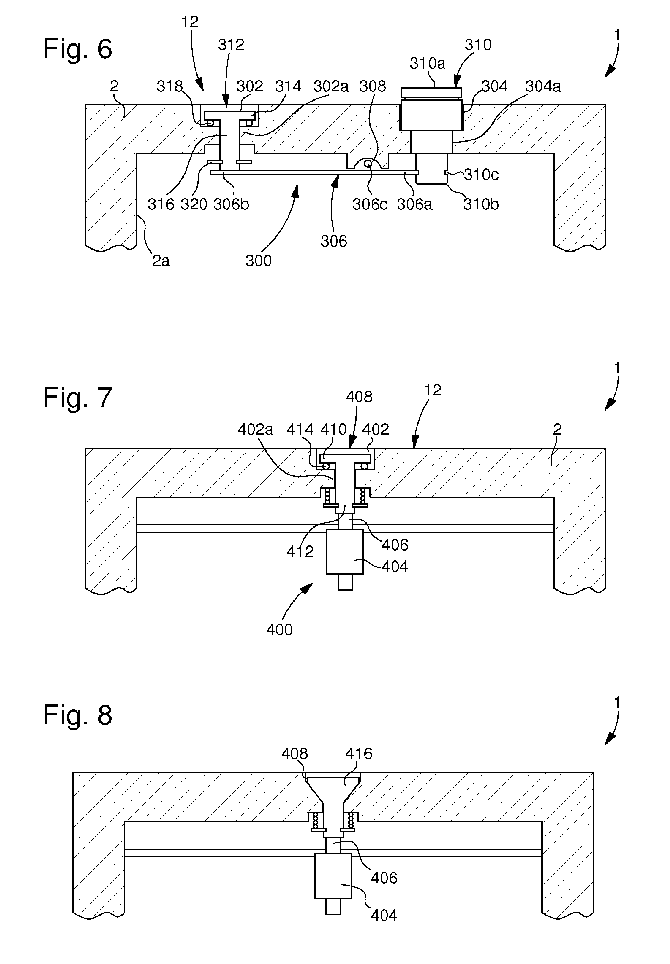

Dans un premier mode d'exécution visible à la figure 6, le boitier 2 de l'objet portable est agencé pour comprendre une première ouverture 302 et une seconde ouverture 304 laissant passer un volume d'air conséquent située dans le fond du boitier. La première ouverture 302 et la seconde ouverture 304 sont de préférence circulaires. Le dispositif de fermeture 12 se présente alors sous la forme d'un système à clapet 300. Ce système à clapet 300 comporte une poutre 306 montée à pivotement sur un socle 308 via un axe de pivotement 306c. Le socle est disposé sur la face intérieure 2a du boitier 2. La poutre 306 présente une première extrémité 306a et une seconde extrémité 306b.

La première extrémité 306a est agencée pour coopérer avec un poussoir 310, ce poussoir 310 devant s'insérer dans la seconde ouverture. Ce poussoir 310 est une pièce dont la section est identique à celle de la seconde ouverture 304 de sorte à former une pièce cylindrique. La pièce cylindrique formant le poussoir comprend une extrémité extérieure 310a visible depuis l'extérieur de l'objet portable et une extrémité intérieure 310b. Cette extrémité intérieure 310b du poussoir 310 est couplée avec la poutre 306 via une gorge 310c de sorte que le déplacement du poussoir entraine le basculement de la poutre.

Il peut être prévu que la section du poussoir ne soit pas constante. En effet, la seconde ouverture 304 peut présenter un décrochement 304a de son diamètre de sorte que celui-ci diminue. Ce décrochement 304a du diamètre entraine l'apparition d'une butée empêchant le poussoir 310 de s'enfoncer à l'intérieur du boitier 2.

Au niveau de la seconde extrémité de la poutre, un clapet 312 est agencé. Ce clapet 312 se présente sous la forme d'une base circulaire 314 à partie de laquelle s'étend une tige 316 dont l'extrémité libre est fixée à la poutre 306. Le clapet 312 est alors utilisé pour fermer la première ouverture 302.

La première ouverture 302 peut présenter une zone de décrochement 302a présentant une section de plus faible diamètre. Cette zone de décrochement 302a est utilisée pour agir avec le clapet 312 de sorte à ouvrir ou fermer ladite ouverture 302.

En effet, le clapet 312 est solidaire de la poutre 306 de sorte que le basculement de la poutre 306 par rapport à son axe de pivotement 306c entraine une modification de la position du clapet 312 par rapport à la zone de décrochement 302a. Ainsi, lorsque le poussoir est enfoncé vers l'intérieur du boitier 2, la poutre bascule sur son axe de pivotement 306c. Le clapet 312 se déplace alors dans un sens opposé. Dans ce cas précis, le clapet 312 s'éloigne de la zone de décrochement 302a laissant l'air rentrer dans le boitier 2.

Lorsque le poussoir 310 est tiré vers l'extérieur du boitier 2, la poutre 306 bascule sur son axe de pivotement 306c. Le clapet 312 se déplace alors dans un sens opposé, dans le cas présent, pour se rapprocher de la zone de décrochement 302a. Un contact se fait entre la zone de décrochement 302a et le clapet 312 pour bloquer l'air et l'empêcher de rentrer dans le boitier 2. Le poussoir 310 peut être muni, à son extrémité extérieure 310a, d'une rainure 310d pour faciliter la préhension dudit poussoir 310. Il pourra être prévu que lorsque le poussoir 310 est en position enfoncé pour permettre l'ouverture du clapet 312, ledit poussoir 310 fasse saillie du boitier 2 pour faciliter sa préhension.

Astucieusement, il peut être prévu que le système à clapet 12 puisse se fermer automatiquement en cas de contact avec un milieu aquatique. Effectivement, lorsque le clapet 312 est en position ouvert, l'air rentre à l'intérieur du boitier. Toutefois, si l'utilisateur plonge soudainement dans un milieu aquatique ou oublie que le poussoir est en position enfoncé, l'eau peut s'engouffrer dans le boitier 2 et causer des dégâts. A ce titre, la poutre 306 est réalisée dans un matériau présentant des propriétés de flexibilité. Cette propriété permet, lorsque l'objet portable 1 est plongé dans un milieu aquatique, d'avoir la pression de l'eau qui s'exerce sur la poutre 306. Cette pression entraîne une déformation de la poutre 306 et donc un déplacement du clapet 312 qui va être plaqué sur la zone de décrochement. La première ouverture 302 va alors être fermée et rendre l'objet portable 1 étanche.

Dans une autre variante, il peut être prévu d'installer un joint 318 au niveau de la zone de décrochement 302a. Ce joint 318 s'intercale entre la base 314 du clapet 312 et la zone de décrochement 302a et permet une meilleure étanchéité aux liquides.

Dans une autre variante, une butée 320 est agencée au niveau de la face inférieure 2a du boitier 2. Cette butée 320 est utilisée afin de limiter la course du clapet 312.

Dans un second mode d'exécution, le boitier 2 de l'objet portable est agencé pour comprendre une première ouverture 402 laissant passer un volume d'air conséquent située dans le fond du boitier. Le dispositif de fermeture 12 se présente alors sous la forme d'un système à clapet 400 commandé par un actionneur. Ce système à clapet 400 comporte un actionneur 404 relié par un bras 406 à un clapet 408. L'actionneur est commandé par un microcontrôleur intégré au système électronique 8, celui-ci pouvant commander automatiquement l'actionneur 404 ou transmettre une commande manuelle venue de l'utilisateur via des moyens de commande. L'actionneur 404 agit alors sur le clapet 408 en le déplaçant en translation pour fermer ou ouvrir ladite première ouverture 402.

Dans une première alternative visible à la figure 7, le clapet se présente sous la forme d'une base 410 circulaire à partie de laquelle s'étend une tige 412 dont l'extrémité libre est fixée au bras 406 et donc relié à l'actionneur 404. La première ouverture 402 présente alors une zone de décrochement 402a présentant une section de plus faible diamètre. Cette zone de décrochement 402a est utilisée pour agir avec le clapet 408 de sorte à ouvrir ou fermer ladite ouverture 402.

En effet, lorsqu'il est décidé par l'utilisateur ou le microcontrôleur que la pile nécessite de l'air, une commande est envoyée à l'actionneur. Cette commande ordonne à l'actionneur 404 d'agir sur le clapet 408 pour laisser libre l'accès à l'air. L'actionneur 404 se met alors en fonctionnement pour, via le bras 406, déplacer le clapet 408. Dans le cas où l'enceinte doit être alimentée en air pour une mesure d'altitude, le clapet 408 est déplacé afin de s'éloigner de la zone de décrochement 402a.

Lorsqu'il est décidé par l'utilisateur ou le microcontrôleur que la pile a suffisamment d'air ou qu'elle doit être isolée de l'environnement extérieur, une commande est envoyée à l'actionneur 404. Cette commande ordonne à l'actionneur 404 d'agir sur le clapet 408 pour fermer l'accès à l'air. L'actionneur 404 se met alors en fonctionnement pour, via le bras 406, déplacer le clapet 408. Dans ce cas, le clapet 408 est déplacé afin d'entrer en contact de la zone de décrochement 402a et bloquer l'accès à l'air.

Dans une variante de cette première alternative, il peut être prévu d'installer un joint 414 au niveau de la zone de décrochement 402a. Ce joint 414 s'intercale entre la base 410 du clapet 408 et la zone de décrochement 402a et permet une meilleure étanchéité aux liquides.

Dans une seconde alternative visible à la figure 8, le clapet 408 se présente sous forme d'obus 416 c'est à dire en forme de cylindre terminé par un cône. La première ouverture 402 possède également une forme d'obus de sorte que le clapet 408 puisse s'insérer dans l'ouverture 402. Comme le clapet 408 et l'ouverture 402 ont une forme similaire, le clapet 408 vient prendre appui sur la partie conique de l'ouverture offrant une efficacité de la fermeture améliorée.

Ainsi la fermeture de la première ouverture 402 par le clapet 408 se fait par frottement. En effet, lorsqu'il est décidé par l'utilisateur ou le microcontrôleur que l'altimètre doit être isolé de l'environnement extérieur, une commande est envoyée à l'actionneur 404. Cette commande ordonne à l'actionneur 404 d'agir sur le clapet 408 pour fermer l'accès à l'air. L'actionneur se met alors en fonctionnement pour, via le bras, déplacer le clapet. Comme le clapet et la première ouverture ont une forme similaire, le clapet s'emboite dans l'ouverture. Cet emboitement du clapet dans l'ouverture provoque une fermeture de cette dernière.

Pour la première et la seconde alternative, il peut être prévu de remédier aux problèmes d'ouverture accidentelle du boitier 2 dans un environnement non adéquate. En effet, une fausse manipulation peut arriver ou le microcontrôleur peut détecter un manque d'oxygène et tenter d'ouvrir le boitier 2. Ainsi, pour contourner ce problème, l'actionneur 404 sera dimensionné de sorte que la force qu'il exerce pour ouvrir la première ouverture 402 soit insuffisante lorsqu'une pression importante est exercée sur ledit clapet 408. Ainsi, si le microcontrôleur tente d'ouvrir le clapet 408, la pression exercée par l'eau rendre impossible le déplacement du clapet 408 par l'actionneur 404.

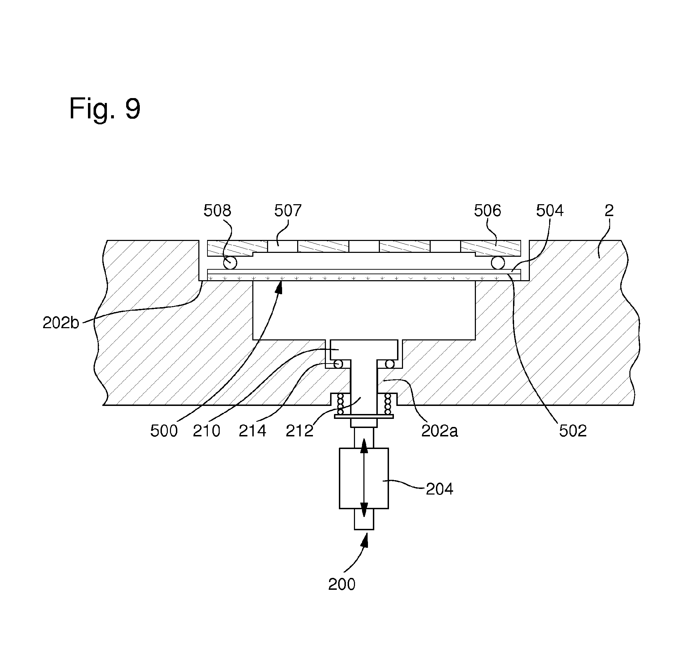

Dans une variante du premier et du second mode de réalisation visible à la figure 9, le boitier de l'objet portable est agencé pour comprendre une membrane haute densité 500. Cette membrane haute densité est placée entre l'extérieur de l'objet portable et les systèmes à clapet 100, 200. Pour cela, l'ouverture dans laquelle un épaulement 202b est agencé. Cet épaulement 202b présente un diamètre plus important que celui de l'ouverture 102.

La membrane haute-densité 500 aussi « membrane supportée » ou « membrane composite » est composé d'un film 504 réalisé dans un matériau polymère qui retient à 100% l'eau mais qui est perméable aux gaz, comme tous les plastiques.

Ainsi, pour pouvoir utiliser ce film 504, il est alors obligatoire de le déposer sur un support 502 qui est également une membrane beaucoup plus épaisse. Cette membrane support est poreuse pour que l'air puisse passer, le seule rôle de la membrane support 502 est mécanique puisque son seul but est de supporter le film 504 en polymère. Par exemple, une membrane support en gore-tex® peut être utilisée.

Afin de régler le débit d'air traversant la membrane haute densité 500, l'épaisseur du film 504 est le paramètre sur lequel il faut agir. Plus le film 504 sera fin et plus le débit sera important mais le film 504 sera plus fragile et inversement.

Typiquement, pour avoir une constante de temps pour l'équilibre des gaz entre l'intérieur et l'extérieur de l'objet portable de l'ordre d'une minute, l'épaisseur du film 18a doit être de l'ordre de 10 micromètres.

Cette membrane haute densité est protégée de l'environnement extérieur par un couvercle 506. Ce couvercle 506 peut être vissé ou clipsé à la carrure et utiliser un joint O-ring 308 pour l'étanchéité. Le couvercle 506 comprend des orifices 507 permettant à l'air d'entrer dans le boitier.

Cette variante présente comme premier avantage d'avoir le clapet de fermeture se trouvant toujours au sec.

De plus, le fait de combiner un système à clapet avec une membrane haute densité permet d'éviter le risque d'inondation lors d'une ouverture inopinée. En effet, comme il est prévu d'avoir deux systèmes d'étanchéité de sorte que si le système à clapet est en panne ou que l'utilisateur oublie de le fermer, la membrane haute densité est toujours là.

Cette variante permet également au microcontrôleur d'avoir le contrôle sur le flux d'air à l'intérieur de la montre.

On comprendra que diverses modifications et / ou améliorations évidentes pour l'homme du métier peuvent être apportées aux différents modes de réalisation de l'invention décrits dans la présente description sans sortir du cadre de l'invention.

## Revendications

1. Objet portable (1) comprenant un boîtier (2) formant une enceinte dans laquelle un appareil (6) nécessitant de l'air pour son fonctionnement est agencé, **caractérisé en ce que** ledit boitier comporte au moins une première ouverture (102, 202, 302, 402), ledit objet portable comprenant en outre un dispositif de fermeture (12) muni d'un système à clapet (100, 200, 300, 400) pour permettre ou non à l'air de rentrer dans l'enceinte en fermant ou non ladite ouverture.

2. Objet portable selon la revendication 1, **caractérisé en ce que** ledit appareil nécessitant de l'air pour son fonctionnement est une pile zinc-air.

3. Objet portable selon les revendications 1 ou 2, **caractérisé en ce que** ledit appareil nécessitant de l'air pour son fonctionnement est un altimètre.

4. Objet portable selon l'une des revendications précédentes, **caractérisé en ce que** le système à clapet (200, 400) comprenant un clapet (208, 408) monté mobile par un actionneur (204, 404), ledit actionneur comprenant un bras (206, 406) à l'extrémité libre duquel le clapet est fixé.

5. Objet portable selon la revendication 4, **caractérisé en ce que** l'actionneur déplace le clapet selon un mouvement de translation.

6. Objet portable selon la revendication 4, **caractérisé en ce que** l'actionneur est commandé par un système électronique (8) agencé dans l'objet portable.

7. Objet portable selon l'une des revendications 1 à 3, **caractérisé en ce que** le système à clapet (100, 300) comprenant un clapet (112, 312 monté mobile par une poutre (106, 306) montée à pivotement sur un socle (108, 308), ledit clapet étant monté à une première extrémité (106b, 306b) de la poutre.

8. Objet portable selon la revendication 6, **caractérisé en ce que** le système à clapet (100, 300) comprenant en outre une seconde ouverture (104, 304) dans laquelle est agencé un poussoir (110, 310), ledit poussoir étant fixé à une seconde extrémité (106a, 306a) de la poutre de sorte qu'une action sur le poussoir dans une direction entraine le déplacement du clapet dans une direction opposée.

9. Objet portable selon les revendications 4 ou 7, **caractérisé en ce que** le clapet (112, 208, 312, 408) comporte une base circulaire (114, 210, 314, 410) à partie de laquelle s'étend une tige (116, 212, 316, 412) dont l'extrémité libre est fixée à ladite poutre, ladite base entrant en contact avec ledit boitier pour le fermer.

10. Objet portable selon la revendication 9, **caractérisé en ce que** la première ouverture (102, 202, 302, 402) comprend une zone de décrochement (102a, 202a, 302a, 402a) présentant une section de plus faible diamètre, ladite base entrant en contact avec ladite zone de décrochement pour fermer ledit boîtier.

11. Objet portable selon la revendication 4, **caractérisé en ce que** le clapet (208, 408) se présente sous forme d'un cylindre terminé par un cône (216, 416), la première ouverture possédant une forme similaire de sorte que le clapet puisse s'insérer dans ladite première ouverture.

12. Objet portable selon l'une des revendications précédentes, **caractérisé en ce que** le dispositif de fermeture (12) comprend en outre une membrane semi-perméable (500) comportant un support poreux (502) sur lequel un film (504) perméable aux gaz et imperméable aux liquides est fixé, l'épaisseur dudit film permettant de modifier la constante de temps pour l'équilibre des gaz entre l'intérieur et l'extérieur de l'objet portable.
